# EUROPEAN PATENT SPECIFICATION

(11) **EP 0 650 515 B1**
(45) Date of publication and mention of the grant of the patent: **25.08.1999**
(21) Application number: 93910038.4
(22) Date of filing: 18.05.1993
(51) Int. Cl.: C09K 17/00

(54) **A GYPSUM BASED BINDING AGENT FOR SOIL BUILDING**
GIPSBASIERTES BINDEMITTEL FÜR BODENBEFESTIGUNG
SUBSTANCE DE LIAISON A BASE DE GYPSE DESTINEE A LA STABILISATION DE SOLS

(30) Priority: 19.05.1992 FI 922265
(43) Date of publication of application: 03.05.1995
(73) Proprietor: KEMIRA OY, SF-02271 Espoo (FI)
(72) Inventor: LINDELL, Josef, FIN-28840 Pori (FI); KONSTARI, Olli, FIN-28540 Pori (FI); LAMMI, Pekka, FIN-28200 Pori (FI)
(74) Representative: Dr. Weitzel & Partner
(86) International application number: FI9300209
(87) International publication number: WO9323494

(56) References cited:
- DE-A- 2 622 086
- DE-C- 868 723
- US-A- 3 147 129
- US-A- 4 367 986
- DERWENT'S ABSTRACT, No. 88-269632/38, week 8838; & SU,A,1379266 (KAMEN SILIKAT COMBI), 7 March 1988 (07.03.88).

## Description

The present invention relates to a binding agent for use for stabilizing soil materials and for reducing the water-permeability of water-permeable soils. The invention also relates to a binding agent composition which contains this binding agent and also contains other binding agents, known per se

The best building areas, in which the soil is very suitable, have in many places already been taken into use. For this reason, construction must increasingly focus on areas with very soft soil, for example clay or silt soil, i.e. so-called cohesive soils. Therefore the soil must be made loadbearing. Piledriving was previously the most common method of making soil suitable for building. However, piledriving is a cumbersome, slow and relatively expensive method, especially when what is in question is the constructing of surface areas, streets and sidewalks, pipelines, and other such projects in a safe manner so that detrimental depressions will not appear in the course of time.

Such methods for improving the strength of soil have been described in, for example, FI patent publication 74772, in which flat pieces of a resilient, open net structure are embedded into the soil.

British application publication 2073090 A describes a method for improving the strength of soil, in which method long and wide pieces made of a resilient plastic material are embedded in parallel into the soil.

Since the 1970s, deep stabilization by a method, developed for it, in which a certain stabilization composition is injected via a rotating blade forced into the soil has begun to be used increasingly for the stabilization of soft soils. In this method the composition is mixed into the surrounding soil material, with which it will react, set, and form a bearing column usually having a diameter of 30-120 cm.

Previously, burnt lime was used as a binding agent. At present, burnt lime (CaO) and cement are generally used at a suitable mixing ratio.

Finnish application publication No. 812355 discloses a method for improving the strength of the subgrade, wherein both cement and plasticizers are admixed into a soil which contains moisture. In particular, these plasticizers are concrete plasticizers and/or concrete flow promoters, known per se, and they are used in an amount of 2.5 - 5 %, calculated from the cement content.

So-called quick-clay soils are especially difficult in terms of stabilization. They are encountered, for example, in the northern parts of the Soviet Union, in Scandinavia, in Canada, in the northern parts of New York State, and in New Zealand. These clays originally sedimented in sea or lake waters within a short period of time during the first ice age elevation to above sea level. However, only some of these clay deposits later transformed into sensitive quick clays. Such a change was mainly due to the following two processes: adsorbed groundwater may have leached the salt content of the original pore water of the clay, or an organic substance derived from bogs or mires and serving as a dispersing agent may have ended up in the clay. The first process has been the most important in the clays encountered in Norway, whereas clays with a high content of organic matter, formed by the second process, are often encountered in Sweden and Canada.

In an undisturbed state, quick clays have a certain limited strength but, when stirred, they often become fluid. This phenomenon has caused a number of quick-clay slides in eastern and central Norway, often with catastrophic consequences.

A number of chemical stabilization formulae have been experimented with previously in such clays. The formulae have included aluminum chloride (AlCl₃) and potassium chloride (KCl). Quick clays have been stabilized in two different ways: the clay may be mixed and worked with the chemicals, or the chemicals may be allowed to diffuse into undisturbed quick clay. The disadvantage of the salt diffusion method is the long time it requires to reach the required penetration.

Chemicals usable instead of potassium chloride include potassium nitrate, potassium sulfate, ammonium chloride, ammonium nitrate, and ammonium sulfate. It is advantageous to carry out the mixing in such a manner that the stabilized clay will form a series of stacks which extend, at spots separate from each other, to inside the clay deposit, thereby stabilizing the entire clay-containing deposit. The desired size, location and number of the stacks are determined. An effective amount of aluminum hydroxide is mixed with the clay in situ at each spot of the deposit, whereupon it will react with the clay and thus form the desired stacks.

FI patent application 822412 describes a method for the stabilization of clay soil, wherein an effective amount of aluminum hydroxide is mixed with the clay soil, there having preferably been added potassium chloride, potassium nitrate, potassium sulfate, ammonium chloride, ammonium nitrate or ammonium sulfate to the aluminum hydroxide.

There is previously known a deep stabilization method by the use of unslaked lime (CaO). Lime is an old stabilizer, which has been used occasionally. In China, lime was used as a construction material centuries ago. In the United States in the 1940s and in Europe in the 1950s, lime was used as a surface stabilization agent. In the deep stabilization method, lime is mixed and worked with the clay, whereby a series of stacks extending down into the clay are formed. These stacks provide lateral stabilization in the clay deposit.

Both the lime method and the potassium chloride method have certain disadvantages. Potassium chloride stabilizes an undisturbed surrounding clay but not disturbed clay. Furthermore, unslaked lime produces non-homogenous stabilization. Lime pockets produce brittle cylinders which have a low lateral shear strength. Furthermore, unslaked lime is not usable for clays having a high water content.

Finnish patent publication No. 77078 discloses a method for improving the strength of soil, wherein a composition made of Portland cement and a hydrated alkali metal silicate is used. The composition may additionally contain burnt gypsum, a thickening agent, silicon fluoride, and/or a dust binding agent. The composition is admixed into filler soil which has been removed from an excavation, after which the filler soil is returned to the excavation and is compacted.

The most common prior-known binding agents for improving the strength of various soils are lime- and cement-based. They are generally used in an amount of 4-8 % by weight, calculated from the dry weight of the soil. The admixing is carried out at an optimum water content, and thereafter the soil is compacted. The cement binding agent forms with water a cement paste which begins to set after approximately 2 hours. The lime binding agent (CaO and Ca(OH)₂) forms with water a pulp which will not stiffen or set in water. Setting may begin in a damp soil, but not in a wet soil. Thereupon, ion exchange will occur, or the so-called pozzolanic reaction will begin, leading to a reforming of the minerals.

The disadvantages of the binding agents mentioned above include a relatively high price and limited uses. Cement is suitable for stabilizing coarse soils, lime for stabilizing primarily clay and silt soils. Furthermore, when a cement binding agent is used, the soil must not contain humus. In terms of providing strength, lime is not useful in the treatment of soils, such as muds, which contain a large amount of water.

Present-day binding agents thus have certain disadvantages. Cement does usually provide strength, but when used alone it makes the structure too brittle. It has also been observed that by using a lime-cement mixture sufficient strength values cannot be achieved in all clay soils. Different clays differ substantially from each other, and it is always necessary to determine by preliminary tests whether stabilization can be performed, and with which binding agent mixture.

It has now been observed, surprisingly, that a binding agent which is a gypsum-containing binding agent which contains certain amounts of titanium hydroxide and iron hydroxide compounds, possibly together with conventional binding agents, is suitable for use also in clays for which the state-of-the-art binding agents are not really suitable.

The binding agent according to the invention is thus characterized in that it contains gypsum as the main component and additionally titanium hydroxide and iron hydroxide compounds.

According to a preferred embodiment, the binding agent contains gypsum 30-75 % by weight, preferably 50-70 % by weight, calculated as CaSO₁; a titanium hydroxide compound 0.1-15 % by weight, calculated as Ti; and an iron hydroxide compound 0.5.-15 % by weight, calculated as Fe.

The gypsum is preferably in the form of a hemihydrate or dihydrate.

The invention also relates to a binding agent composition which contains the binding agent according to the invention as ingredient A which promotes stabilization, as well as ingredient B, which contains at least one other agent which promotes stabilization.

The said ingredient B is typically some binding agent prior known per se, such as CaO, cement, bentonite, or the like, or a mixture of these.

The developed new binding agent and binding agent composition make it possible to widen considerably the range of use of the deep stabilization method; this facilitates the taking into use of new land areas difficult to use. In addition, considerably improved strength values are usually achieved.

In the binding agent composition according to the invention, the mixing ratio of ingredients A and B may vary within a wide range. The optimum ratio has to be determined separately for different types of applications. A binding agent composition according to the invention preferably contains ingredient A and ingredient B at a weight ratio of 6:1-1:6.

The uses of the new binding agent and of the new binding agent composition are not limited to deep stabilization; they can also be used successfully for various layered stabilization, for example in road construction, for improving the strength of pipeline excavations and of the subgrades of storage areas and other such areas, for the solidification of mud-like materials, etc.

In one preferred embodiment according to the invention, the binding agent according to the invention, together with bentonite and cement, considerably reduces water-permeability and thus enhances the protective effect of the procedure. The protecting layer can be built by known working methods generally used, or also by using the pile-jetting technique used in deep stabilization.

The binding agent according to the invention can be prepared by adding a basic calcium compound, such as lime slurry or limestone, to a sulfuric acid containing solution which also contains titanium and iron compounds, and by filtering, drying and calcining the precipitated product by prior-known techniques to produce the desired binding agent. The gypsum content, titanium hydroxide content and iron hydroxide content of the binding agent according to the invention may vary depending on the precipitation conditions. Depending on the stabilization conditions and requirements, the binding agent according to the invention is preferably mixed with other binding agents at a suitable ratio, either in a separate mixing plant or on the worksite, for example in a deep stabilization machine or in some other manner.

### Examples

Examples are presented below of the uses of the binding agent according to the invention. Included are four examples of the deep stabilization of different clays, also indicating the effect of the clay type. The fifth example concerns the making of a protecting waterstop by using a binding agent according to the invention. In the examples, the new binding agent is referred to by F.

### Example 1

In this example the clay to be stabilized with a gypsum-containing binding agent had been taken from Musa in Pori. The new binding agent contained gypsum 67 % by weight calculated as CaSO₄, titanium hydroxide 4.5 % by weight calculated as Ti, and iron hydroxide 2.7 % by weight calculated as Fe. The amount of binding agent corresponds to the binding agent amount fed at 20 kg/m into a pillar having a diameter of 500 mm. All the experiments were carried out in comparable conditions. The targeted shear strength was at minimum 100 kPa.

| Binding agent | Ratio | Shear strength |
|---|---|---|
| | | kPa (30 days) |
| F + CaO | 1:1 | 170 |
| F + CaO | 4:1 | 40 |
| Cement + Cao | 1:1 | 60 |
| CaO | | 35 |

### Example 2

Similar to Example 1, but the clay was from Länsiranta in Porvoo.

| Binding agent | Ratio | Shear strength |
|---|---|---|
| | | kPa (30 days) |
| F + CaO | 1:1 | 135 |
| F + CaO | 4:1 | 20 |
| Cement + Cao | 1:1 | 20 |
| CaO | | 15 |

According to the examples, good results were obtained when the ratio of the new binding agent F of the invention to the prior known binding agent, i.e. CaO, was 1:1.

### Example 3

Similar to Example 1, but the clay was from Seinäjoki.

| Binding agent | Ratio | Shear strength |
|---|---|---|
| | | kPa (30 days) |
| F + CaO | 1:1 | 350 |
| F + CaO | 4:1 | 165 |
| Cement + Cao | 1:1 | 170 |
| CaO | | 120 |

### Example 4

Similar to Example 1, but the clay was from Suviniitty in Espoo.

| Binding agent | Ratio | Shear strength |
|---|---|---|
| | | kPa (30 days) |
| F + CaO | 1:1 | 120 |
| F + CaO | 4:1 | 30 |
| Cement + Cao | 1:1 | 70 |
| CaO | | 15 |

### Example 5

The effect of the new gypsum-containing binding agent on the water-permeability of a mixture was tested by measuring, by a specific test arrangement, the amount of water which leaked through a test piece. The water pressure height was 3 m. The binding agent mixtures mentioned below were admixed in an amount of 20 % by weight into the sand to be made water-impermeable. The new binding agent according to the invention contained gypsum 58 % by weight calculated as CaSO₄, titanium hydroxide 9.5 % by weight calculated as Ti, and iron hydroxide 4.1 % by weight calculated as Fe.

The binding agent composition was varied, and the following results were obtained: Reference composition: blast-furnace cement 75 % by weight and bentonite 25 % by weight The filtered amount of water at 30 days was in total 1150 ml and no longer increased.

Test composition A: blast-furnace cement 50 % by weight, bentonite 25 % by weight, and new binding agent 25 % by weight The filtered amount of water was 500 ml and no longer increased.

Test composition B: blast-furnace cement 25 % by weight, bentonite 25 % by weight, and new binding agent 50 % by weight The filtered amount of water was respectively 350 ml, with a slight further increase.

The gypsum-containing binding agent clearly had a reducing effect on the amount of water which filtered through. In a slightly acidic environment, similar satisfactory compressive strength values of 900-700 kPa were obtained with all the compositions.

## Claims

1. A binding agent for use for stabilizing soils and for reducing the water-permeability of water-permeable soils, **characterized** in that it contains gypsum as the principal component and additionally titanium hydroxide and iron hydroxide compounds.

2. A binding agent according to Claim 1, **characterized** in that it contains gypsum 30-75 % by weight calculated as CaSO₄, a titanium hydroxide compound 0.1-15 % by weight calculated as Ti, and an iron hydroxide compound 0.5-15 % by weight calculated as Fe.

3. A binding agent according to Claim 1 or 2, **characterized** in that it contains gypsum preferably 50-70 % by weight calculated as CaSO₄.

4. A binding agent according to any of the above claims, **characterized** in that most of the gypsum is in the form of a hemihydrate or dihydrate.

5. A binding agent composition for use for the stabilization of soils and for the reduction of the water-permeability of water-permeable soils, **characterized** in that it contains a stabilization-promoting ingredient A, which contains gypsum as its principal component and additionally titanium hydroxide and iron hydroxide compounds, and an ingredient B, which contains at least one other agent which promotes stabilization.

6. A binding agent composition according to Claim 5, **characterized** in that ingredient A contains gypsum 30-75 % by weight calculated as CaSO₄, a titanium hydroxide compound 0.1-15 % by weight calculated as Ti, and an iron hydroxide compound 0.5-15 % by weight calculated as Fe.

7. A binding agent composition according to Claim 5 or 6, **characterized** in that ingredient A contains gypsum preferably 50-70 % by weight calculated as CaSO₄.

8. A binding agent composition according to any of Claims 5-7, **characterized** in that most of the gypsum is in the form of a hemihydrate or dihydrate.

9. A binding agent composition according to any of Claims 5-8, **characterized** in that ingredient B contains prior known stabilizers such as CaO, cement, bentonite or the like, or a mixture of these.

10. A binding agent composition according to any of Claims 5-9, **characterized** in that it contains ingredient A and ingredient B at a weight ratio of 6:1-1:6.

11. The **use** of the binding agent according to any of Claims 1-4 or the binding agent composition according to any of Claims 5-10 for the stabilization, strengthening, and waterproofing of various soils in deep stabilization and layered stabilization, for the construction of waterstop beds and walls, and for the solidification of mud-like soil masses.

12. A method for preparing a binding agent according to any of Claims 1-4, **characterized** in that a calcium compound is added to a sulfuric acid containing solution which also contains titanium and iron compounds, and the precipitated product is filtered out and dried or calcined in order to produce the said binding agent.

## Patentansprüche

1. Bindemittel zur Verwendung zum Verfestigen von Böden und zum Reduzieren der Wasserdurchlässigkeit von wasserdurchlässigen Böden,
**dadurch gekennzeichnet, daß** es als Hauptbestandteil Gips und zusätzlich Titanhydroxid- und Eisenhydroxid-Verbindungen enthält.

2. Bindemittel nach Anspruch 1,
**dadurch gekennzeichnet, daß** es 30 -75 Gew.% Gips, bemessen als CaSO₄, 0,1- 15 Gew.% einer Titanhydroxid-Verbindung, bemessen als Ti, und 0,5 -15 Gew.% einer Eisenhydroxid-Verbindung, bemessen als Fe, enthält.

3. Bindemittel nach Anspruch 1 oder 2,
**dadurch gekennzeichnet, daß** es vorzugsweise 50 -70 Gew.% Gips, bemessen als CaSO₄, enthält.

4. Bindemittel nach einem der vorhergehenden Ansprüche,
**dadurch gekennzeichnet, daß** der Großteil des Gipses in der Form eines Hemihydrats oder eines Dihydrats vorliegt.

5. Bindemittelzusammensetzung zur Verwendung zum Verfestigen von Böden und zum Reduzieren der Wasserdurchlässigkeit von wasserdurchlässigen Böden,
**dadurch gekennzeichnet, daß** sie einen verfestigungsfördernden Bestandteil A, der als seinen Hauptbestandteil Gips und zusätzlich Titanhydroxid- und Eisenhydroxid-Verbindungen enthält, und einen Bestandteil B, der zumindest ein anderes Mittel enthält, das die Verfestigung fördert, enthält.

6. Bindemittelzusammensetzung nach Anspruch 5,
**dadurch gekennzeichnet, daß** der Bestandteil A 30 -75 Gew.% Gips, bemessen als CaSO₄, 0,1 - 15 Gew.% einer Titanhydroxid-Verbindung, bemessen als Ti, und 0,5 -15 Gew.% einer Eisenhydroxid-Verbindung, bemessen als Fe, enthält.

7. Bindemittelzusammensetzung nach Anspruch 5 oder 6,
**dadurch gekennzeichnet, daß** der Bestandteil A vorzugsweise 50 -70 Gew.% Gips, bemessen als CaSO₄, enthält.

8. Bindemittelzusammensetzung nach einem der Ansprüche 5 bis 7,
**dadurch gekennzeichnet, daß** der Großteil des Gipses in der Form eines Hemihydrats oder eines Dihydrats vorliegt.

9. Bindemittelzusammensetzung nach einem der Ansprüche 5 bis 8,
**dadurch gekennzeichnet, daß** der Bestandteil B bekannte Stabilisierungsmittel wie CaO, Zement, Bentonit oder dergleichen, oder eine Mischung derselben enthält.

10. Bindemittelzusammensetzung nach einem der Ansprüche 5 bis 9,
**dadurch gekennzeichnet, daß** sie den Bestandteil A und den Bestandteil B in einem Gewichtsverhältnis von 6:1 - 1:6 enthält.

11. Verwendung des Bindemittels nach einem der Ansprüche 1 bis 4 oder der Bindemittelzusammensetzung nach einem der Ansprüche 5 bis 10 für das Verfestigen, Verstärken und Wasserdichtmachen verschiedener Böden bei der Tiefenverfestigung und der Schichtenverfestigung, für die Konstruktion von Wasserrückhaltebetten und -wänden und für das Festwerden von schlammartigen Bodenmassen.

12. Verfahren zum Bereiten eines Bindemittels nach einem der Ansprüche 1 bis 4,
**dadurch gekennzeichnet, daß** eine Kalziumverbindung einer Schwefelsäure enthaltenden Lösung, die auch Titan- und Eisenverbindungen enthält, hinzugefügt wird, und daß das ausgefällte Produkt ausgefiltert und getrocknet oder kalziniert wird, um das Bindemittel herzustellen.

## Revendications

1. Agent liant destiné à être utilisé pour stabiliser des sols et pour réduire la perméabilité à l'eau de sols perméables à l'eau, caractérisé en ce qu'il comprend comme constituant principal du gypse, et en plus des composés hydroxyde de titane et hydroxyde de fer.

2. Agent liant selon la revendication 1, caractérisé en ce qu'il comprend 30 - 75 % en poids de gypse, calculé par rapport au CaSO₄, 0,1 - 15 % en poids de composé hydroxyde de titane, calculé par rapport au Ti, et 0,5 - 15 % en poids de composé hydroxyde de fer, calculé par rapport au Fe.

3. Agent liant selon la revendication 1 ou 2, caractérisé en ce qu'il comprend, de préférence, 50 - 70 % en poids de gypse, calculé par rapport au CaSO₄.

4. Agent liant selon l'une des revendications précédentes, caractérisé en ce que la majeure partie du gypse se trouve sous la forme d'un hémi-hydrate ou di-hydrate.

5. Composition d'agent liant destinée à être utilisée pour stabiliser des sols et pour réduire la perméabilité à l'eau de sols perméables à l'eau, caractérisée en ce qu'elle comprend un ingrédient A promoteur de stabilisation, qui comprend comme son constituant principal du gypse et en plus des composés hydroxyde de titane et hydroxyde de fer, et un ingrédient B, qui comprend au moins un autre agent qui favorise la stabilisation.

6. Composition d'agent liant selon la revendication 5, caractérisée en ce que l'ingrédient A comprend 30 - 75 % en poids de gypse, calculé par rapport au CaSO4, 0,1 - 15 % en poids de composé hydroxyde de titane, calculé par rapport au Ti, et 0,5 - 15 % en poids de composé hydroxyde de fer, calculé par rapport au Fe.

7. Composition d'agent liant selon la revendication 5 ou 6, caractérisée en ce que l'ingrédient A comprend, de préférence, 50 - 70 % en poids de gypse, calculé par rapport au CaSO₄.

8. Composition d'agent liant selon l'une des revendications 5 à 7, caractérisée en ce que la majeure partie du gypse se trouve sous la forme d'un hémi-hydrate ou di-hydrate.

9. Composition d'agent liant selon l'une des revendications 5 à 8, caractérisée en ce que l'ingrédient B comprend des stabilisants déjà connus, tels que du CaO, du ciment, une bentonite ou analogue, ou un mélange de ces derniers.

10. Composition d'agent liant selon l'une des revendications 5 à 9, caractérisée en ce qu'elle comprend l'ingrédient A et l'ingrédient B avec un rapport en poids de 6 :1 - 1: 6.

11. Utilisation de l'agent liant selon l'une des revendications 1 à 4 ou de la composition d'agent liant selon l'une des revendications 5 à 10, pour stabiliser, renforcer, et rendre étanche divers sols selon une stabilisation profonde et une stabilisation en couche, pour construire des parois et des lits stoppeurs d'eau, et pour solidifier des masses formant sol analogues à de la boue.

12. Procédé pour préparer un agent liant selon l'une des revendications 1 à 4, caractérisée en ce que l'on ajoute un composé à base de calcium à une solution comprenant de l'acide sulfurique, qui comprend également des composés à base de titane et de fer, et on sépare par filtration, on sèche ou on calcine le produit précipité, dans le but de produire ledit agent liant.
